# EUROPEAN PATENT SPECIFICATION

(11) **EP 3 822 010 B1**
(45) Date of publication and mention of the grant of the patent: **05.08.2026**
(21) Application number: 19880451.0
(22) Date of filing: 30.09.2019
(51) Int. Cl.: B23B 51/00, B23B 31/11

(54) **DRILLING TOOL WITH STABLE CLAMPING**
BOHRWERKZEUG MIT STABILER EINSPANNUNG
OUTIL DE PERÇAGE À SERRAGE STABLE

(30) Priority: 02.11.2018 CN 201811301440
(43) Date of publication of application: 19.05.2021
(73) Proprietor: Zhuzhou Cemented Carbide Cutting Tools Co., Ltd., Zhuzhou, Hunan 412007 (CN)
(72) Inventor: JIANG, Aisheng, Zhuzhou, Hunan 412007 (CN); WANG, Shequan, Zhuzhou, Hunan 412007 (CN); LI, Ping, Zhuzhou, Hunan 412007 (CN); LIU, Min, Zhuzhou, Hunan 412007 (CN); XIANG, Xingdong, Zhuzhou, Hunan 412007 (CN); ZHAO, Zhiwei, Zhuzhou, Hunan 412007 (CN)
(74) Representative: Lorenz Seidler Gossel Part. mbB
(86) International application number: PCT/CN2019/109463
(87) International publication number: WO 2020/088190

(56) References cited:
- EP-A1- 2 896 478
- CN-A- 104 338 974
- CN-A- 105 537 654
- CN-A- 105 537 654
- CN-A- 109 262 026
- CN-A- 109 262 027
- CN-U- 202 763 145
- CN-U- 207 431 343
- DE-U1- 202011 050 277

## Description

### BACKGROUND

### Technical Field

The present invention relates to the field of drilling tool, in particular to a drilling tool with stable clamping.

### Description of Related Art

In drilling, in order to prolong service life of cutting portions, relatively precious cemented carbide or similar materials are usually used as tool materials. Such materials have high hardness, good wear resistance and considerable difficulty in machining, resulting in high material cost and machining cost of drilling tools. At present, commonly used drilling tools are generally composed of cutting parts and clamping parts. The cutting parts are made of cemented carbide or similar materials with high hardness and good wear resistance, while the clamping parts are made of elastic materials. When the cutting parts are worn out, the cutting parts can be replaced separately, which can reduce drilling cost. However, such drilling tools have poor locating accuracy, liability to fall off and short service life.

CN201511011474.7 discloses a drilling tool, recess and protrusion fit is essentially clearance interference fit of form of thread, and in the process of twisting, clearance fit occurs earlier than interference fit, and finally the clearance fit occurs again. A negative clearance refers to an interference amount. In the case of thread interference clamping, although the thread interference clamping can be realized, it is difficult to accurately control interference size of pitch diameter of thread. At the same time, the thread interference occurs on both sides of the form of thread, resulting in small contact area, poor circumferential centering ability of a tool bit, and complete contact with an axial locating surface. During batch installation, it is hard to guarantee axial and circumferential runout accuracy of the tool bit, and the thread interference can only be used in clamping instead of centering.

CN105537654A discloses a drilling tool according to the preamble of claim 1.

EP 2 896 478 A1 discloses a drilling tool comprising a cutting component and a holding component.

### SUMMARY

The present invention provides a drilling tool that has advantages of stable clamping, fast assembly and disassembly, no axial looseness, high locating accuracy and effective prevention of falling off of cutting parts.

In order to solve the above technical problem, the present invention provides a drilling tool according to the independent claim 1.

The drilling tool with stable clamping comprises a cutting part and a clamping part. The cutting part comprises a cutting portion and a connecting portion connected to a lower end of the cutting portion. The connecting portion is provided with multiple accommodating grooves penetrating the cutting portion. The connecting portion is provided with an outer peripheral surface between the adjacent accommodating grooves. An axial locating surface for axial locating is provided at a connection between the cutting portion and the connecting portion. The clamping part comprises a shank portion and a clamping portion located at a front end of the shank portion. The clamping portion is provided with spiral grooves corresponding to the cuttings accommodating groove and extending to the shank portion. The clamping portion is provided with an inner peripheral surface for clamping the outer peripheral surface between the adjacent spiral grooves. A front end of the clamping portion is provided with an axial surface corresponding to the axial locating surface. The axial locating surface is in contact with the axial surface. A middle portion of the outer peripheral surface and a middle portion of the inner peripheral surface are respectively provided with a recess and a protrusion which are engaged with each other. The recess is spirally twisted into the protruding in a direction of a central axis. When the clamping part clamps the cutting part, the outer peripheral surface provided on the side close to the axial locating surface and the inner peripheral surface provided on the side close to the axial surface fit together with a varying interference amount λ, which meets the requirement: -0.1mm≤λ≤0.05mm.

According to the present invention, the recess is composed of two recess side surfaces and a recess bottom surface connected between the recess side surfaces. Each of the recess side surfaces is provided with an inner recess side surface at an end close to the recess bottom surface. The recess is composed of two protruding side surfaces and a protruding top surface connected between the two protruding side surfaces. Each of the protruding side surfaces is provided with an inner protruding side surface on a side close to the inner peripheral surface. When the clamping part clamps the cutting part, a clearance between the axial locating surface and the axial surface is τ1, and a clearance between the inner recess side surface of the recess side surface on a side away from the axial locating surface and the inner protruding side surface of the protruding side surface on a side away from the axial surface is τ2, which meets the following requirement: τ1=r2=0.

According to the present invention, when the clamping part clamps the cutting part, a clearance between the inner recess side surface at a side close to the axial locating surface and the inner protruding side surface at a side close to the axial surface is τ3, which meets the following requirement: 0mm≤τ3≤0.1mm.

According to the present invention, the cutting portion is provided with a torque transmitting surface for circumferential locating, the clamping portion is provided with a circumferential surface for circumferential locating, and the torque transmitting surface is in contact with the circumferential surface. When the clamping part clamps the cutting part, a clearance between the torque transmitting surface and the circumferential surface is τ4, which meets the requirement: 0mm≤τ4≤0.05mm.

According to the present invention, the connecting portion is provided with a bottom end surface which is perpendicular to the central axis on a side away from the cutting portion. An inclined notch is arranged between the recess and the bottom end surface. The clamping portion is provided with a groove bottom surface perpendicular to the central axis in a direction of a side close to the shank portion. A tail bump corresponding to the inclined notch is arranged between the protrusion and the groove bottom surface. When the clamping part clamps the cutting part, a clearance between the inclined notch and the tail bump is τ5, which meets the following requirement: 0.02mm≤τ5≤0.1mm.

Preferably, in the direction of the central axis, a lead angle of the recess of the cutting part is α, which meets the following requirement: 8°≤α≤12°.

Preferably, the recess side surface comprises a top recess side surface, and the top recess side surface is arranged close to the outer peripheral surface. Each of the recess side surfaces comprises a top protruding side surface, and the top protruding side surface is arranged close to the protruding top surface. When the clamping part clamps the cutting part, the top protruding side surface is not in contact with the recess, and the top recess side surface is not in contact with the protrusion.

Preferably, the inner recess side surface is located between the top recess side surface and the recess bottom surface. The inner protruding side surface is located between the top protruding side surface and the protruding top surface. A diameter of the outer peripheral surface of the cutting part is D, a radial depth of the inner recess side surface is L, a radial depth of the top recess side surface is L1, a radial depth of the inner protruding side surface is L', and a radial depth of the top protruding side surface is L1', which meets the following requirements: 0.02D≤L, L'≤0.15D, 0.003D≤L1, and L1'≤0.01D.

Preferably, in a plane passing through the central axis, a distance from a projection line of the outer peripheral surface to the central axis is constant. In the process of twisting the outer peripheral surface of the cutting part into the inner peripheral surface of the clamping part, a variation in distance from a projection line of the inner peripheral surface to the central axis is △R, which meets the following requirements: 0<ΔR≤0.04mm.

Preferably, when the recess of the cutting part is completely twisted into the protrusion of the clamping part, a maximum circumferential twisting angle between the recess and the protrusion is γ, which meets the following requirement: 70°≤γ≤130°.

Preferably, when the twisting angle is 0.4γ-0.65γ, a distance R from the projection line of the inner peripheral surface to the central axis has a minimum value in the plane passing through the central axis.

Preferably, when the recess of the cutting part is twisted into the protrusion of the clamping part, the variation in distance △R changes linearly with increase of the twisting angle.

Preferably, in the plane passing through the central axis, a distance R from the projection line of the inner peripheral surface to the central axis is constant. In the process of twisting the outer peripheral surface of the cutting part into the inner peripheral surface of the clamping part, in the plane passing through the central axis, a variation in distance from the projection line of the outer peripheral surface to the central axis is △R', which meets the following requirement: 0<△R'≤0.04mm.

Preferably, when the recess of the cutting part is completely twisted into the protrusion of the clamping part, the maximum circumferential twisting angle between the recess and the protrusion is γ, which meets the following requirement: 70°≤γ≤130°.

Preferably, when the twisting angle is 0.4y-0.65y, a distance R' from the projection line of the outer peripheral surface to the central axis has a maximum value in the plane passing through the central axis.

Preferably, when the recess of the cutting part is twisted into the protrusion of the clamping part, the variation in distance △R' changes linearly with increase of the twisting angle.

Compared with the prior art, the present invention has the following advantages:

In the drilling tool with stable clamping of the present invention, the recess of the cutting part is spirally twisted into the protrusion of the clamping part, and interference fit occurs between the outer peripheral surface of the cutting part and the inner peripheral surface of the clamping part. The fit between the outer peripheral surface and the inner peripheral surface essentially refers to clearance interference fit between an inner hole wall and an outer cylinder. In the process of twisting, clearance fit occurs earlier than the interference fit, and finally the clearance fit occurs again. In this manner, the inner hole and the outer cylinder can be used in clamping and accurately centering, which can improve assembly accuracy, and reduce manufacturing difficulty of the recess and the protrusion. The clamping parts can not only quickly and conveniently complete clamping of the cutting part, but also effectively prevent the cutting part from loosening around the central axis.

In the drilling tool with stable clamping of the present invention, in the direction parallel to the central axis, the clearance between the axial locating surface and the axial surface is τ1, and the clearance between the recess side surface on the side away from the axial locating surface and the protruding side surface on the side away from the axial surface is τ2, which should meet the following requirement: τ1=τ2=0. The clamping part and the cutting part clamp the cutting part up and down simultaneously without any clearance on the axial locating surface and the inner recess side surface, so that the cutting part can be positioned accurately in the direction of the central axis and will not come loose in the direction of the central axis in the cutting process, which improves cutting stability.

In the drilling tool with stable clamping of the present invention, the cutting part and the clamping part are respectively provided with a torque transmitting surface and a circumferential surface for transmitting circumferential load. In the direction of rotation along the central axis, the clearance between the torque transmitting surface and the circumferential surface is τ4, with 0mm≤τ4≤0.05mm.The clamping part forms over-locating clamping to the cutting part, resulting in good locating strength, accuracy and impact resistance. Precise and accurate design of the clearance τ4 between the torque transmitting surface and the circumferential surface can not only effectively reduce manufacturing difficulty of an over-locating structure, but also use axial micro deformation of the protrusion (generally less than 0.004mm) to increase contact area between the recess and the protrusion and realize the complete contact between the torque transmitting surface and the circumferential surface, thus improving the clamping stability and clamping repeatability of the cutting part, reducing cutting vibration and improving surface quality of the hole while greatly improving the service life of cutting part.

In the drilling tool with stable clamping of the present invention, the top protruding side surface is not in contact with the recess, and the top recess side surface is not in contact with the protrusion, so that the protrusion can only be in contact with the inner recess side surface, which can maximize effective contact length and contact strength of the recess and the protrusion, prevent the cutting part from falling off from the clamping part, and improve stress capacity of an interface, thus prolonging the service life of the cutting part.

In the drilling tool with stable clamping of the present invention, by precisely designing the lead angle α at which the recess of the cutting part is spirally twisted into the protrusion of the clamping part and the clearance τ4 between the torque transmitting surface and the circumferential surface, even if manufacturing tolerance of the cutting part is inevitable, when the cutting parts are assembled interchangeably in batches, the axial locating surface, the inner recess side surface and the torque transmitting surface of the cutting part are still in full contact with the clamping part, which greatly ensures interchangeability and performance stability of different cutting parts.

### BRIEF DESCRIPTION OF THE DRAWINGS

FIG. 1 is a 3D structure diagram of an embodiment of the present invention.
FIG. 2 is a front view of an embodiment of the present invention.
FIG. 3 is a left view of an embodiment of the present invention.
FIG. 4 is A-A sectional view of FIG. 2.
FIG. 5 is B-B sectional view of FIG. 2.
FIG. 6 is a 3D structure diagram of a cutting part in an embodiment of the present invention.
FIG. 7 is a front view of a cutting part in an embodiment of the present invention.
FIG. 8 is a C-C sectional view of FIG. 7.
FIG. 9 is a D-D sectional view of FIG. 7.
FIG. 10 is a 3D structure diagram of a clamping part in an embodiment of the present invention.
FIG. 11 is a side view of a clamping part in an embodiment of the present invention.
FIG. 12 is an F-F sectional view of FIG. 11.

### Reference numerals in the drawings:

1. Cutting part; 11. Cutting portion; 111. Cutting surface; 112. Axial locating surface; 113. Torque transmitting surface; 12. Connecting portion; 121. Bottom end surface; 13. Outer peripheral surface; 14. Cuttings accommodating groove; 2. Clamping part; 21. Clamping portion; 211. Groove top surface; 212. Axial surface; 213. Groove bottom surface; 214. Circumferential surface; 215. Bottom recess; 22. Shank portion; 23. Inner peripheral surface; 24. Central axial; 25. Spiral groove; 3. Recess; 31. Recess side surface; 311. Inner recess side surface; 312. Top recess side surface; 32. Recess bottom surface; 4. Protrusion; 41. Protruding side surface; 411. Inner protruding side surface; 412. Top protruding side surface; 42. Protruding top surface; 5. Inclined notch; 51. Inclined side surface; 52. Inclined bottom surface; 6. Tail bump; 61. Tail side surface; 62. Tail top surface.

### DESCRIPTION OF THE EMBODIMENTS

The present invention will be further explained in detail in combination with the drawings and specific embodiments.

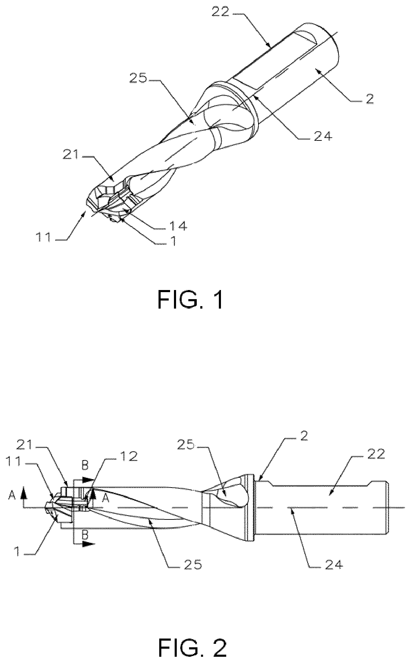

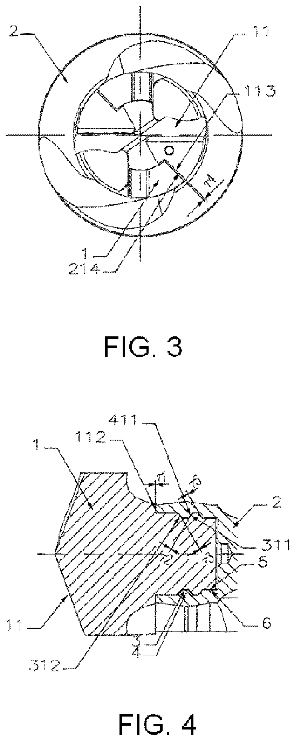

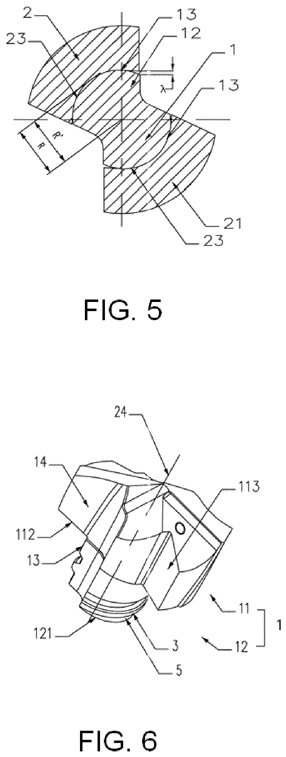

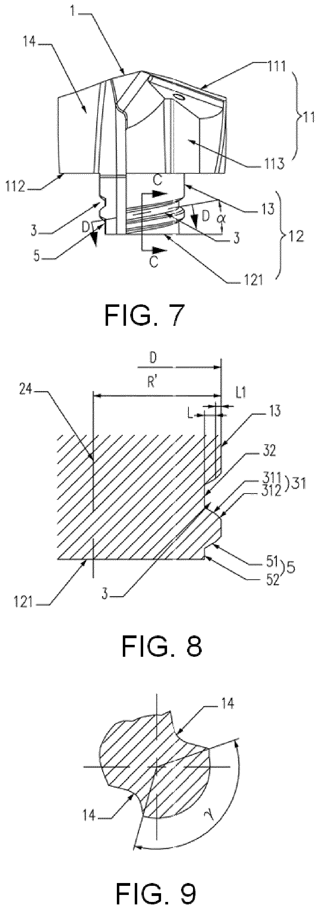

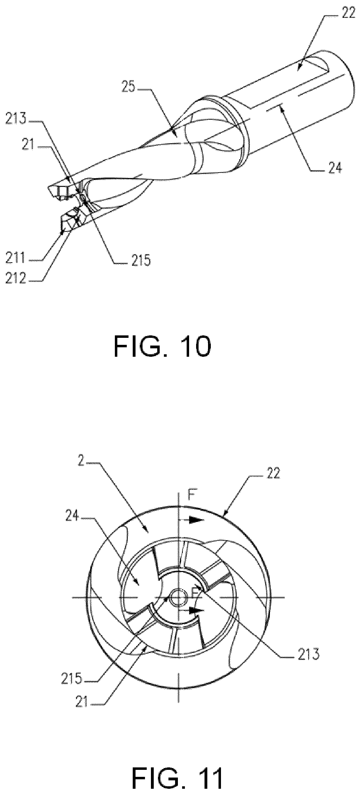

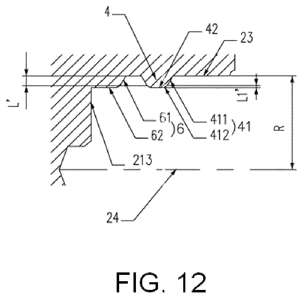

FIG. 1 to FIG. 12 show an embodiment of a drilling tool with stable clamping of the present invention. The drilling tool with stable clamping comprises a cutting part 1 and a clamping part 2, and the cutting part 1 and the clamping part 2 are symmetrical with respect to a central axis 24. The cutting part 1 comprises a cutting portion 11 and a connecting portion 12 connected to a lower end of the cutting portion 11, and the clamping part 2 comprises a shank portion 22 and two clamping portions 21 at a front end of the shank portion 22. The cutting portion 11 of the cutting part 1 is provided with two cutting edges, and the connecting portion 12 is provided with multiple accommodating grooves 14 penetrating the cutting portion 11. The connecting portion 12 is provided with an outer peripheral surface 13 between the adjacent accommodating grooves 14, the clamping portion 21 is provided with spiral grooves 25 corresponding to the cuttings accommodating groove 14 and extending to the shank portion 22, and the clamping portion 21 is provided with an inner peripheral surface 23 for clamping the outer peripheral surface 13 between the adjacent spiral grooves 25. Middle portions and bottoms of the outer peripheral surface 13 are respectively provided with a recess 3 and an inclined notch 5, and middle portions and bottoms of the inner peripheral surface 23 are respectively provided with a protrusion 4 and a tail bump 6. An axial locating surface 112 is provided at a junction between the cutting portion 11 and the connecting portion 12, the clamping portion 21 is provided with an axial surface 212 corresponding to the axial locating surface 112, and a clearance is arranged between a bottom end surface 121 of the connecting portion 12 of the cutting part 1 and a groove bottom surface 213 of the clamping portion 21 of the clamping part 2. The recess 3 spirally rotates around the central axis 24 of the clamping part 2 to accommodate the protrusion 4 to engagement to achieve complete clamping of the cutting part 1 on the clamping part 2. In order to ensure that the clamping part 2 forms high-precision and high-strength clamping on the cutting part 1, and ensure that the cutting part 1 does not fall off from the clamping part 2 during use, the outer peripheral surface 13 and the inner peripheral surface 23 match with a varying interference amount λ in the complete clamping process, which should meet the following requirement: -0.1mm≤λ≤0.05mm.

In the clamping process, the clamping process is clearance fit → clearance decrease → interference fit → interference increase → maximum interference → clearance fit. A change rule of the interference amount λ is from the minimum value λₘᵢₙ (-0.1mm) to the maximum value λₘₐₓ (0.05mm). After the complete clamping, the interference amount λ returns to the minimum value λₘᵢₙ.

In the present embodiment, in order to improve the clamping effect of the clamping part 2 on the cutting part 1, when the cutting part 1 is twisted into the clamping part 2, the interference amount λ of the clamping part changes in a range of -0.05mm and 0.03mm in the process from the clearance to the interference. At the beginning of the clamping, the interference amount λ is -0.1mm (at this time, the clamping part 2 and the cutting part 1 are in clearance fit), and then the interference amount λ gradually increases to 0.05mm. In order to ensure that the inner peripheral surface 23 of the clamping part 2 can stably and elastically clamp the outer peripheral surface 13 of the cutting part 1, a bottom recess 215 is provided on the groove bottom surface 213 of the clamping portion 21 of the clamping part 2.

A front end of the cutting portion 11 is provided with a cutting surface 111, a rear end of the connecting portion 12 is provided with a bottom end surface 121, and an axial locating surface 112 for axial locating is provided at a junction between the cutting portion 11 and the connecting portion 12. The two clamping parts 21 are arranged opposite to each other along the central axis 24, a middle portion thereof is provided with a mounting groove, a front end of the clamping portion 21 is provided with a groove top surface 211, and a rear end of the mounting groove is provided with a groove bottom surface 213. In the direction of the central axis 24, a torque transmitting surface 113 for circumferential locating is arranged between the cutting surface 111 and the locating surface 112, and the clamping portion 21 is provided with a circumferential surface 214 corresponding to the torque transmitting surface 113 between the groove top surface 211 and the axial surface 212.

The recess 3 in the middle of the outer peripheral surface 13 of the connecting portion 12 of the cutting part 1 is composed of two recess side surfaces 31 and one recess bottom surface 32. Each of the recess side surfaces 31 is composed of an inner recess side surface 311 and a top recess side surface 312. The inner recess side surface 311 is arranged close to the recess bottom surface 32, and the top recess side surface 312 is arranged close to the outer peripheral surface 13.

The protrusion 4 in the middle of the inner peripheral surface 23 of the clamping portion 21 is composed of two protruding side surfaces 41 and a protruding top surface 42. Each of the protruding side surfaces 41 is composed of an inner protruding side surface 411 and a top protruding side surface 412, the inner protruding side surface 411 is arranged close to the inner peripheral surface 23, and the top protruding side surface 412 is arranged close to the protruding top surface 42.

In a plane passing through the central axis 24, an included angle between the two top recess side surfaces 312 on the recess 3 is greater than that between the two inner recess side surfaces 311, an included angle between the two top protruding side surfaces 412 on the protrusion 4 is greater than that between the corresponding two inner protruding side surfaces 411, and the included angle between the two inner recess side surfaces 311 is essentially equal to that between the two inner protruding side surfaces 411.

In order to make the clamping part 2 form over-locating clamping to the cutting part 1 and improve stability and impact resistance of the clamping, when the clamping part 2 completely clamps the cutting part 1, a clearance between the axial locating surface 112 and the axial surface 212 is τ1, and a clearance between the inner recess side surface 311 on a side away from the axial locating surface 112 and the inner protruding side surface 411 on a side away from the axial surface 212 is τ2, which should meet the following requirement: τ1=τ2=0. That is, the inner recess side surface 311 on the side away from the axial locating surface 112 is in contact with the inner protruding side surface 411 on the side away from the axial surface 212, and the axial locating surface 112 is in contact with the axial surface 212.

On the plane in the direction of the central axis 24, an inclined notch 5 is arranged between the recess 3 of the cutting portion 11 and the bottom end surface 121, the clamping portion 21 is provided with a tail bump 6 corresponding to the inclined notch5, and the tail bump 6 is arranged between the protrusion 4 and the groove bottom surface 213. The inclined notch 5 is composed of one inclined side surface 51 and one inclined bottom surface 52, the tail bump 6 is composed of a tail side surface 61 and a tail top surface 62, the inclined side surface 51 is not in contact with the inner tail side surface 61, and a clearance between the inner recess side surface 311 on the side close to the axial locating surface 112 and the inner protruding side surface 411 on the side close to the axial surface 212 is τ3, which should meet the following requirement: 0mm≤τ3≤0.03mm.

A lead angle of the recess side surface 31 of the cutting part 1 is α in the direction of the central axis 24, which should meet the following requirement: 8°≤α≤12°.

When the torque transmitting surface 113 is in contact with the circumferential surface 214, and the clamping part 2 completely clamps the cutting part 1, a clearance between the torque transmitting surface 113 and the circumferential surface 214 is τ4, which should meet the following requirement: 0mm≤τ4≤0.05mm.

The inner protruding side surface 411 on the side close to the axial surface 212 is in fit with the inner recess side surface 311 on the side close to the axial locating surface 112, while the top protruding side surface 412 is not in contact with the inner recess side surface 311 of the recess 3. On the plane in the direction of the central axis 24, a clearance between the inclined notch 5 and the tail bump 6 is τ5, which should meet the following requirement: 0.02mm≤τ5≤0.1mm.

The recess bottom surface 32 is not in contact with the protruding top surface 42. In order to simplify the structure of the clamping part 2 to the cutting part 1 and reduce manufacturing difficulty, in the plane passing through the central axis 24, a distance from a projection line of the outer peripheral surface 13 to the central axis 24 is constant. In the process of twisting the recess 3 of the cutting part 1 into the protrusion 4 of the clamping part 2, a distance R' from a projection line of the outer peripheral surface 13 on the connecting portion 12 of the cutting part 1 to the central axis 24 changes linearly with the increase of a twisting angle with variation being △R', which should meet the following requirement: 0<△R'≤0.04mm. In order to ensure that the cutting part 1 and the clamping part 2 have good mounting interchangeability and accurate clamping locating, in the present embodiment, △R=0.025mm.

The top protruding side surface 412 is not in contact with the recess 3, and the top recess side surface 312 is not in contact with the protrusion 4. In order to ensure the locating accuracy and clamping strength of the clamping part 2 to the cutting part 1, and to eliminate the influence of failure to perform back gouging for the recess 3 of the cutting part 1 and the protrusion 4 of the clamping part 2 on the locating and clamping, a diameter of the outer peripheral surface 13 of the cutting part 1 is D, a radial depth of the inner recess side surface 311 is L, a radial depth of the top recess side surface 312 is L1, and a radial depth of the inner protruding side surface 411 is L', and a radial depth of the top protruding side surface 412 is L1', which should meet the following requirements:0.02D<L, L'≤0.15D, 0.003D≤L1, and L1'≤0.01D. In the present embodiment, in order to ensure full contact and locating strength between the inner protruding side surface 411 and the inner recess side surface 311, L1=0.06D, and L2=0.07D.

When the recess 3 of the cutting part 1 is completely twisted into the protrusion 4 of the clamping part 2, a maximum circumferential twisting angle γ of spirally rotating the recess 3 and the protrusion 4 around the central axis 24 should meet the following requirement: 70°≤γ≤130°. In order to ensure that the cutting part 1 can be easily assembled and disassembled and that the clamping part 2 has enough clamping strength to the cutting part 1, in the present embodiment, γ=100°.

In order to ensure that a clamping part 2 can clamp different cutting parts 1, and the cutting parts 1 have good interchangeability and connection strength, when the actual twisting angle is 0.4γ-0.65γ in the plane passing through the central axis 24, the distance R' from the projection line of the outer peripheral surface 13 to the central axis 24 has a minimum value (the interference amount is maximum when the outer peripheral surface has a minimum radius). In order to ensure mounting convenience and high location strength, in the present embodiment, when the actual twisting angle is 0.45γ-0.55γ, the distance R' from the projection line of the outer peripheral surface 13 to the central axis 24 has the minimum value.

In the present embodiment, in the process of twisting the recess 3 of the cutting part 1 into the protrusion 4 of the clamping part 2, in the plane passing through the central axis 24, the distance from the projection line of the outer peripheral surface 13 to the central axis 24 is constant, while the distance R from the projection line of the inner peripheral surface 23 to the central axis 24 is a variation, which aims to reduce the manufacturing difficulty. The invention is not limited to this, according to the different manufacturing difficulties and design methods, the distance from the projection line of the inner peripheral surface 23 to the central axis 24 can be constant, the distance R' from the projection line of the outer peripheral surface 13 to the central axis 24 changes linearly with the increase of the twisting angle in the process of twisting the recess 3 of the cutting part 1 into the protrusion 4 of the clamping part, and the variation is △R' and should meet the following requirement: 0≤△R'≤0.04mm.

In addition, according to the different design and manufacturing processes, the distance from the projection line of the outer peripheral surface 13 of the cutting part 1 to the central axis 24 and the distance from the projection line of the inner peripheral surface 23 of the clamping part 2 to the central axis 24 can be designed to be varying to ensure the interference amount.

In the above embodiments, each cutting part 1 is provided with two cutting edges. The invention is not limited to this. According to different applications and different working parameters, a single cutting part 1 can be provided with three or more cutting edges. Meanwhile, in the above embodiments, the distance from the outer peripheral surface 13 on the connecting portion 12 of the cutting part 1 to the central axis 24 is R'. In the process of twisting the recess 3 of the cutting part 1 into the protrusion 4 of the clamping part 2, the variations △R and △R' change linearly with the increase of the twisting angle. The present invention is not limited to this. In order to improve operation convenience of twisting the cutting part 1 into the clamping part 2, the variations △R and △R' can also be designed as quadratic curves and other changes.

Although the present invention has been disclosed as above in the preferred embodiments, they are not intended to limit the present invention.

## Claims

1. A drilling tool with stable clamping, comprising a cutting part (1) and a clamping part (2), wherein the cutting part (1) comprises a cutting portion (11) and a connecting portion (12) connected to a lower end of the cutting portion (11), the connecting portion (12) is provided with a plurality of accommodating grooves (14) penetrating the cutting portion (11), the connecting portion (12) is provided with an outer peripheral surface (13) between the adjacent accommodating grooves (14), an axial locating surface (112) for axial locating is provided at a connection between the cutting portion (11) and the connecting portion (12), the clamping part (2) comprises a shank portion (22) and a clamping portion (21) located at a front end of the shank portion (22), the clamping portion (21) is provided with spiral grooves (25) corresponding to the accommodating groove (14) and extending to the shank portion (22), the clamping portion (21) is provided with an inner peripheral surface (23) for clamping the outer peripheral surface (13) between the adjacent spiral grooves (25), a front end of the clamping portion (21) is provided with an axial surface (212) corresponding to the axial locating surface (112), the axial locating surface (112) is in contact with the axial surface (212), a middle portion of the outer peripheral surface (13) and a middle portion of the inner peripheral surface (23) are respectively provided with a recess (3) and a protrusion (4) which are engaged with each other, the recess (3) is spirally twisted into the protrusion (4) in a direction of a central axis (24), wherein, when the clamping part (2) clamps the cutting part (1), the outer peripheral surface (13) provided on the side close to the axial locating surface (112) and the inner peripheral surface (23) provided on the side close to the axial surface (212) fit together with a varying interference amount λ, which meets: - 0.1mm≤λ≤0.05mm; wherein the recess (3) is composed of two recess side surfaces (31) and a recess bottom surface (32) connected between the recess side surfaces (31), each of the recess side surfaces (31) is provided with an inner recess side surface (311) at an end close to the recess bottom surface (32), the protrusion (4) is composed of two protruding side surfaces (41) and a protruding top surface (42) connected between the two protruding side surfaces (41), each of the protruding side surfaces (41) is provided with an inner protruding side surface (411) on a side close to the inner peripheral surface (23), when the clamping part (2) clamps the cutting part (1), a clearance between the axial locating surface (112) and the axial surface (212) is τ1, and a clearance between the inner recess side surface (311) of the recess side surface (31) on a side away from the axial locating surface (112) and the inner protruding side surface (411) of the protruding side surface (41) on a side away from the axial surface (212) is τ2, which meets: τ1=r2=0; when the clamping part (2) clamps the cutting part (1), a clearance between the inner recess side surface (311) at a side close to the axial locating surface (112) and the inner protruding side surface (411) at a side close to the axial surface (212) is τ3, which meets: 0mm≤τ3≤0.1mm; wherein the cutting portion (11) is provided with a torque transmitting surface (113) for circumferential locating, the clamping portion (21) is provided with a circumferential surface (214) for circumferential locating, and the torque transmitting surface (113) is in contact with the circumferential surface (214), when the clamping part (2) clamps the cutting part (1), a clearance between the torque transmitting surface (113) and the circumferential surface (214) is τ4, which meets: 0mm≤τ4≤0.05mm; wherein the connecting portion (12) is provided with a bottom end surface (121) which is perpendicular to the central axis (24) on a side away from the cutting portion (11), an inclined notch (5) is arranged between the recess (3) and the bottom end surface (121), the clamping portion (21) is provided with a groove bottom surface (213) perpendicular to the central axis (24) in a direction of a side close to the shank portion (22), a tail bump (6) corresponding to the inclined notch (5) is arranged between the protrusion (4) and the groove bottom surface (213), **characterised in that**, when the clamping part (2) clamps the cutting part (1), a clearance between the inclined notch (5) and the tail bump (6) is τ5, which meets: 0.02mm≤r5≤0.1mm.

2. The drilling tool as recited in claim 1, **characterized in that**, in the direction of the central axis (24), a lead angle of the recess (3) of the cutting part (1) is α, which meets: 8°≤α≤12°.

3. The drilling tool as recited in claim 1, **characterized in that**, each of the recess side surfaces (31) comprises a top recess side surface (312), and the top recess side surface (312) is arranged close to the outer peripheral surface (13), each of the protruding side surfaces (41) comprises a top protruding side surface (412), and the top protruding side surface (412) is arranged close to the protruding top surface (42), when the clamping part (2) clamps the cutting part (1), the top protruding side surface (412) is not in contact with the recess (3), and the top recess side surface (312) is not in contact with the protrusion (4).

4. The drilling tool as recited in claim 3, **characterized in that**, the inner recess side surface (311) is located between the top recess side surface (312) and the recess bottom surface (32), and the inner protruding side surface (411) is located between the top protruding side surface (412) and the protruding top surface (42), a diameter of the outer peripheral surface (13) of the cutting part (1) is D, a radial depth of the inner recess side surface (311) is L, a radial depth of the top recess side surface (312) is L1, a radial depth of the inner protruding side surface (411) is L', and a radial depth of the top protruding side surface (412) is L1', which meets: 0.02D≤L, L'≤0.15D, 0.003D≤L1, and L1'≤0.01D.

5. The drilling tool as recited in claim 4, **characterized in that**, in a plane passing through the central axis (24), a distance from a projection line of the outer peripheral surface (13) to the central axis (24) is constant, in the process of twisting the outer peripheral surface (13) of the cutting part (1) into the inner peripheral surface (23) of the clamping part (2), a variation in distance from a projection line of the inner peripheral surface (23) to the central axis (24) is △R, which meets: 0<△R≤0.04mm.

6. The drilling tool as recited in claim 5, **characterized in that**, when the recess (3) of the cutting part (1) is completely twisted into the protrusion (4) of the clamping part (2), a maximum circumferential twisting angle between the recess (3) and the protrusion (4) is γ, which meets: 70°≤γ≤130°.

7. The drilling tool as recited in claim 6, **characterized in that**, when the twisting angle is 0.4γ-0.65γ, a distance R from the projection line of the inner peripheral surface (23) to the central axis (24) has a minimum value in the plane passing through the central axis (24).

8. The drilling tool as recited in claim 7, **characterized in that**, when the recess (3) of the cutting part (1) is twisted into the protrusion (4) of the clamping part (2), the variation in distance △R changes linearly with increase of the twisting angle.

9. The drilling tool as recited in claim 4, **characterized in that**, in the plane passing through the central axis (24), a distance R from the projection line of the inner peripheral surface (23) to the central axis (24) is constant, in the process of twisting the outer peripheral surface (13) of the cutting part (1) into the inner peripheral surface (23) of the clamping part (2), in the plane passing through the central axis (24), a variation in distance from the projection line of the outer peripheral surface (13) to the central axis (24) is △R', which meets: 0<△R'≤0.04mm.

10. The drilling tool as recited in claim 9, **characterized in that**, when the recess (3) of the cutting part (1) is completely twisted into the protrusion (4) of the clamping part (2), a maximum circumferential twisting angle between the recess (3) and the protrusion (4) is γ, which meets: 70°≤γ≤130°.

11. The drilling tool as recited in claim 10, **characterized in that**, when the twisting angle is 0.4γ-0.65γ, a distance R' from the projection line of the outer peripheral surface (13) to the central axis (24) has a maximum value in the plane passing through the central axis (24).

## Patentansprüche

1. Bohrwerkzeug mit stabiler Klemmung, umfassend ein Schneidteil (1) und ein Klemmteil (2), wobei das Schneidteil (1) einen Schneidabschnitt (11) und einen mit einem unteren Ende des Schneidabschnitts (11) verbundenen Verbindungsabschnitt (12) umfasst, wobei der Verbindungsabschnitt (12) mit einer Mehrzahl von den Schneidabschnitt (11) durchsetzenden Aufnahmenuten (14) versehen ist, wobei der Verbindungsabschnitt (12) zwischen benachbarten Aufnahmenuten (14) mit einer Außenumfangsfläche (13) versehen ist, wobei an einer Verbindung zwischen dem Schneidabschnitt (11) und dem Verbindungsabschnitt (12) eine axiale Positionierfläche (112) zur axialen Positionierung vorgesehen ist, wobei das Klemmteil (2) einen Schaftabschnitt (22) und einen an einem vorderen Ende des Schaftabschnitts (22) angeordneten Klemmabschnitt (21) umfasst, wobei der Klemmabschnitt (21) mit Spiralnuten (25) versehen ist, die der Aufnahmenut (14) entsprechen und sich zu dem Schaftabschnitt (22) erstrecken, wobei der Klemmabschnitt (21) zwischen benachbarten Spiralnuten (25) mit einer Innenumfangsfläche (23) zum Klemmen der Außenumfangsfläche (13) versehen ist, wobei ein vorderes Ende des Klemmabschnitts (21) mit einer der axialen Positionierfläche (112) entsprechenden axialen Fläche (212) versehen ist, wobei die axiale Positionierfläche (112) mit der axialen Fläche (212) in Kontakt steht, wobei ein mittlerer Abschnitt der Außenumfangsfläche (13) und ein mittlerer Abschnitt der Innenumfangsfläche (23) jeweils mit einer Vertiefung (3) und einem Vorsprung (4) versehen sind, die miteinander in Eingriff stehen, wobei die Vertiefung (3) in Richtung einer Mittelachse (24) spiralförmig in den Vorsprung (4) eingedreht ist, wobei, wenn das Klemmteil (2) das Schneidteil (1) klemmt, die auf der Seite nahe der axialen Positionierfläche (112) vorgesehene Außenumfangsfläche (13) und die auf der Seite nahe der axialen Fläche (212) vorgesehene Innenumfangsfläche (23) mit einem variierenden Interferenzmaß λ zusammenpassen, wobei gilt: -0,1 mm ≤ λ ≤ 0,05 mm; wobei die Vertiefung (3) aus zwei Vertiefungsseitenflächen (31) und einer zwischen den Vertiefungsseitenflächen (31) verbundenen Vertiefungsbodenfläche (32) zusammengesetzt ist, wobei jede der Vertiefungsseitenflächen (31) an einem Ende nahe der Vertiefungsbodenfläche (32) mit einer inneren Vertiefungsseitenfläche (311) versehen ist, wobei der Vorsprung (4) aus zwei Vorsprungsseitenflächen (41) und einer zwischen den zwei Vorsprungsseitenflächen (41) verbundenen Vorsprungsoberfläche (42) zusammengesetzt ist, wobei jede der Vorsprungsseitenflächen (41) auf einer Seite nahe der Innenumfangsfläche (23) mit einer inneren Vorsprungsseitenfläche (411) versehen ist, wobei, wenn das Klemmteil (2) das Schneidteil (1) klemmt, ein Spiel zwischen der axialen Positionierfläche (112) und der axialen Fläche (212) τ1 beträgt und ein Spiel zwischen der inneren Vertiefungsseitenfläche (311) der Vertiefungsseitenfläche (31) auf einer von der axialen Positionierfläche (112) entfernten Seite und der inneren Vorsprungsseitenfläche (411) der Vorsprungsseitenfläche (41) auf einer von der axialen Fläche (212) entfernten Seite τ2 beträgt, wobei gilt: τ1 = τ2 = 0; wobei, wenn das Klemmteil (2) das Schneidteil (1) klemmt, ein Spiel zwischen der inneren Vertiefungsseitenfläche (311) an einer Seite nahe der axialen Positionierfläche (112) und der inneren Vorsprungsseitenfläche (411) an einer Seite nahe der axialen Fläche (212) τ3 beträgt, wobei gilt: 0 mm ≤ τ3 ≤ 0,1 mm; wobei der Schneidabschnitt (11) mit einer Drehmomentübertragungsfläche (113) zur umfangsseitigen Positionierung versehen ist, wobei der Klemmabschnitt (21) mit einer Umfangsfläche (214) zur umfangsseitigen Positionierung versehen ist und wobei die Drehmomentübertragungsfläche (113) mit der Umfangsfläche (214) in Kontakt steht, wobei, wenn das Klemmteil (2) das Schneidteil (1) klemmt, ein Spiel zwischen der Drehmomentübertragungsfläche (113) und der Umfangsfläche (214) τ4 beträgt, wobei gilt: 0 mm ≤ τ4 ≤ 0,05 mm; wobei der Verbindungsabschnitt (12) auf einer von dem Schneidabschnitt (11) entfernten Seite mit einer unteren Endfläche (121) versehen ist, die senkrecht zur Mittelachse (24) ist, wobei zwischen der Vertiefung (3) und der unteren Endfläche (121) eine geneigte Aussparung (5) angeordnet ist, wobei der Klemmabschnitt (21) in Richtung einer Seite nahe dem Schaftabschnitt (22) mit einer zur Mittelachse (24) senkrechten Nutbodenfläche (213) versehen ist, wobei zwischen dem Vorsprung (4) und der Nutbodenfläche (213) ein der geneigten Aussparung (5) entsprechender Endvorsprung (6) angeordnet ist, **dadurch gekennzeichnet, dass**, wenn das Klemmteil (2) das Schneidteil (1) klemmt, ein Spiel zwischen der geneigten Aussparung (5) und dem Endvorsprung (6) τ5 beträgt, wobei gilt: 0,02 mm ≤ τ5 ≤ 0,1 mm.

2. Bohrwerkzeug nach Anspruch 1, **dadurch gekennzeichnet, dass** in Richtung der Mittelachse (24) ein Steigungswinkel der Vertiefung (3) des Schneidteils (1) α beträgt, wobei gilt: 8° ≤ α ≤ 12°.

3. Bohrwerkzeug nach Anspruch 1, **dadurch gekennzeichnet, dass** jede der Vertiefungsseitenflächen (31) eine obere Vertiefungsseitenfläche (312) umfasst und die obere Vertiefungsseitenfläche (312) nahe der Außenumfangsfläche (13) angeordnet ist, wobei jede der Vorsprungsseitenflächen (41) eine obere Vorsprungsseitenfläche (412) umfasst und die obere Vorsprungsseitenfläche (412) nahe der Vorsprungsoberfläche (42) angeordnet ist, wobei, wenn das Klemmteil (2) das Schneidteil (1) klemmt, die obere Vorsprungsseitenfläche (412) nicht mit der Vertiefung (3) in Kontakt steht und die obere Vertiefungsseitenfläche (312) nicht mit dem Vorsprung (4) in Kontakt steht.

4. Bohrwerkzeug nach Anspruch 3, **dadurch gekennzeichnet, dass** die innere Vertiefungsseitenfläche (311) zwischen der oberen Vertiefungsseitenfläche (312) und der Vertiefungsbodenfläche (32) angeordnet ist und die innere Vorsprungsseitenfläche (411) zwischen der oberen Vorsprungsseitenfläche (412) und der Vorsprungsoberfläche (42) angeordnet ist, wobei ein Durchmesser der Außenumfangsfläche (13) des Schneidteils (1) D beträgt, eine radiale Tiefe der inneren Vertiefungsseitenfläche (311) L beträgt, eine radiale Tiefe der oberen Vertiefungsseitenfläche (312) L1 beträgt, eine radiale Tiefe der inneren Vorsprungsseitenfläche (411) L' beträgt und eine radiale Tiefe der oberen Vorsprungsseitenfläche (412) L1' beträgt, wobei gilt: 0,02D ≤ L, L' ≤ 0,15D, 0,003D ≤ L1 und L1' ≤ 0,01D.

5. Bohrwerkzeug nach Anspruch 4, **dadurch gekennzeichnet, dass** in einer durch die Mittelachse (24) verlaufenden Ebene ein Abstand von einer Projektionslinie der Außenumfangsfläche (13) zur Mittelachse (24) konstant ist, wobei beim Eindrehen der Außenumfangsfläche (13) des Schneidteils (1) in die Innenumfangsfläche (23) des Klemmteils (2) eine Änderung des Abstands von einer Projektionslinie der Innenumfangsfläche (23) zur Mittelachse (24) ΔR beträgt, wobei gilt: 0 < ΔR ≤ 0,04 mm.

6. Bohrwerkzeug nach Anspruch 5, **dadurch gekennzeichnet, dass**, wenn die Vertiefung (3) des Schneidteils (1) vollständig in den Vorsprung (4) des Klemmteils (2) eingedreht ist, ein maximaler umfangsseitiger Verdrehwinkel zwischen der Vertiefung (3) und dem Vorsprung (4) γ beträgt, wobei gilt: 70° ≤ γ ≤ 130°.

7. Bohrwerkzeug nach Anspruch 6, **dadurch gekennzeichnet, dass**, wenn der Verdrehwinkel 0,4 γ *-* 0,65 γ beträgt, ein Abstand R von der Projektionslinie der Innenumfangsfläche (23) zur Mittelachse (24) in der durch die Mittelachse (24) verlaufenden Ebene einen Minimalwert aufweist.

8. Bohrwerkzeug nach Anspruch 7, **dadurch gekennzeichnet, dass**, wenn die Vertiefung (3) des Schneidteils (1) in den Vorsprung (4) des Klemmteils (2) eingedreht wird, sich die Abstandsänderung ΔR linear mit Zunahme des Verdrehwinkels ändert.

9. Bohrwerkzeug nach Anspruch 4, **dadurch gekennzeichnet, dass** in der durch die Mittelachse (24) verlaufenden Ebene ein Abstand R von der Projektionslinie der Innenumfangsfläche (23) zur Mittelachse (24) konstant ist, wobei beim Eindrehen der Außenumfangsfläche (13) des Schneidteils (1) in die Innenumfangsfläche (23) des Klemmteils (2) in der durch die Mittelachse (24) verlaufenden Ebene eine Änderung des Abstands von der Projektionslinie der Außenumfangsfläche (13) zur Mittelachse (24) ΔR' beträgt, wobei gilt: 0 < ΔR' ≤ 0,04 mm.

10. Bohrwerkzeug nach Anspruch 9, **dadurch gekennzeichnet, dass**, wenn die Vertiefung (3) des Schneidteils (1) vollständig in den Vorsprung (4) des Klemmteils (2) eingedreht ist, ein maximaler umfangsseitiger Verdrehwinkel zwischen der Vertiefung (3) und dem Vorsprung (4) γ beträgt, wobei gilt: 70° ≤ γ ≤ 130°.

11. Bohrwerkzeug nach Anspruch 10, **dadurch gekennzeichnet, dass**, wenn der Verdrehwinkel 0,4 γ - 0,65 γ beträgt, ein Abstand R' von der Projektionslinie der Außenumfangsfläche (13) zur Mittelachse (24) in der durch die Mittelachse (24) verlaufenden Ebene einen Maximalwert aufweist.

## Revendications

1. Outil de perçage à serrage stable, comprenant une partie coupante (1) et une partie de serrage (2), dans lequel la partie coupante (1) comprend une portion coupante (11) et une portion de liaison (12) reliée à une extrémité inférieure de la portion coupante (11), la portion de liaison (12) étant pourvue d'une pluralité de rainures de logement (14) traversant la portion coupante (11), la portion de liaison (12) étant pourvue d'une surface périphérique extérieure (13) entre les rainures de logement (14) adjacentes, une surface de positionnement axial (112) destinée au positionnement axial étant prévue au niveau d'une connexion entre la portion coupante (11) et la portion de liaison (12), la partie de serrage (2) comprenant une portion de queue (22) et une portion de serrage (21) située à une extrémité avant de la portion de queue (22), la portion de serrage (21) étant pourvue de rainures hélicoïdales (25) correspondant à la rainure de logement (14) et s'étendant jusqu'à la portion de queue (22), la portion de serrage (21) étant pourvue d'une surface périphérique intérieure (23) destinée à serrer la surface périphérique extérieure (13) entre les rainures hélicoïdales (25) adjacentes, une extrémité avant de la portion de serrage (21) étant pourvue d'une surface axiale (212) correspondant à la surface de positionnement axial (112), la surface de positionnement axial (112) étant en contact avec la surface axiale (212), une portion médiane de la surface périphérique extérieure (13) et une portion médiane de la surface périphérique intérieure (23) étant respectivement pourvues d'un évidement (3) et d'une saillie (4) qui sont engagés l'un avec l'autre, l'évidement (3) étant introduit par torsion hélicoïdale dans la saillie (4) dans une direction d'un axe central (24), dans lequel, lorsque la partie de serrage (2) serre la partie coupante (1), la surface périphérique extérieure (13) prévue sur le côté proche de la surface de positionnement axial (112) et la surface périphérique intérieure (23) prévue sur le côté proche de la surface axiale (212) s'ajustent ensemble avec une valeur d'interférence variable λ, qui satisfait à : -0,1 mm ≤ λ ≤ 0,05 mm ; dans lequel l'évidement (3) est composé de deux surfaces latérales d'évidement (31) et d'une surface de fond d'évidement (32) reliée entre les surfaces latérales d'évidement (31), chacune des surfaces latérales d'évidement (31) étant pourvue d'une surface latérale intérieure d'évidement (311) à une extrémité proche de la surface de fond d'évidement (32), la saillie (4) étant composée de deux surfaces latérales de saillie (41) et d'une surface supérieure de saillie (42) reliée entre les deux surfaces latérales de saillie (41), chacune des surfaces latérales de saillie (41) étant pourvue d'une surface latérale intérieure de saillie (411) sur un côté proche de la surface périphérique intérieure (23), lorsque la partie de serrage (2) serre la partie coupante (1), un jeu entre la surface de positionnement axial (112) et la surface axiale (212) est τ1, et un jeu entre la surface latérale intérieure d'évidement (311) de la surface latérale d'évidement (31) sur un côté éloigné de la surface de positionnement axial (112) et la surface latérale intérieure de saillie (411) de la surface latérale de saillie (41) sur un côté éloigné de la surface axiale (212) est τ2, qui satisfait à : τ1 = τ2 = 0 ; lorsque 1a partie de serrage (2) serre la partie coupante (1), un jeu entre la surface latérale intérieure d'évidement (311) sur un côté proche de la surface de positionnement axial (112) et la surface latérale intérieure de saillie (411) sur un côté proche de la surface axiale (212) est τ3, qui satisfait à : 0 mm ≤ τ3 ≤ 0,1 mm ; dans lequel la portion coupante (11) est pourvue d'une surface de transmission de couple (113) destinée au positionnement circonférentiel, la portion de serrage (21) étant pourvue d'une surface circonférentielle (214) destinée au positionnement circonférentiel, et la surface de transmission de couple (113) étant en contact avec la surface circonférentielle (214), lorsque la partie de serrage (2) serre la partie coupante (1), un jeu entre la surface de transmission de couple (113) et la surface circonférentielle (214) est τ4, qui satisfait à : 0 mm ≤ τ4 ≤ 0,05 mm ; dans lequel la portion de liaison (12) est pourvue d'une surface d'extrémité inférieure (121), qui est perpendiculaire à l'axe central (24), sur un côté éloigné de la portion coupante (11), une encoche inclinée (5) étant agencée entre l'évidement (3) et la surface d'extrémité inférieure (121), la portion de serrage (21) étant pourvue d'une surface de fond de rainure (213) perpendiculaire à l'axe central (24) dans une direction d'un côté proche de la portion de queue (22), une bosse terminale (6) correspondant à l'encoche inclinée (5) étant agencée entre la saillie (4) et la surface de fond de rainure (213), **caractérisé en ce que**, lorsque la partie de serrage (2) serre la partie coupante (1), un jeu entre l'encoche inclinée (5) et la bosse terminale (6) est τ5, qui satisfait à : 0,02 mm ≤ τ5 ≤ 0,1 mm.

2. Outil de perçage selon la revendication 1, **caractérisé en ce que**, dans la direction de l'axe central (24), un angle d'hélice de l'évidement (3) de la partie coupante (1) est α, qui satisfait à : 8° ≤ α ≤ 12°.

3. Outil de perçage selon la revendication 1, **caractérisé en ce que** chacune des surfaces latérales d'évidement (31) comprend une surface latérale supérieure d'évidement (312), et la surface latérale supérieure d'évidement (312) est agencée à proximité de la surface périphérique extérieure (13), chacune des surfaces latérales de saillie (41) comprenant une surface latérale supérieure de saillie (412), et la surface latérale supérieure de saillie (412) étant agencée à proximité de la surface supérieure de saillie (42), lorsque la partie de serrage (2) serre la partie coupante (1), la surface latérale supérieure de saillie (412) n'est pas en contact avec l'évidement (3), et la surface latérale supérieure d'évidement (312) n'est pas en contact avec la saillie (4).

4. Outil de perçage selon la revendication 3, **caractérisé en ce que** la surface latérale intérieure d'évidement (311) est située entre la surface latérale supérieure d'évidement (312) et la surface de fond d'évidement (32), et la surface latérale intérieure de saillie (411) est située entre la surface latérale supérieure de saillie (412) et la surface supérieure de saillie (42), un diamètre de la surface périphérique extérieure (13) de la partie coupante (1) étant D, une profondeur radiale de la surface latérale intérieure d'évidement (311) étant L, une profondeur radiale de la surface latérale supérieure d'évidement (312) étant L1, une profondeur radiale de la surface latérale intérieure de saillie (411) étant L', et une profondeur radiale de la surface latérale supérieure de saillie (412) étant L1', qui satisfont à : 0,02D ≤ L, L' ≤ 0,15D, 0,003D ≤ L1, et L1' ≤ 0,01D.

5. Outil de perçage selon la revendication 4, **caractérisé en ce que**, dans un plan passant par l'axe central (24), une distance entre une ligne de projection de la surface périphérique extérieure (13) et l'axe central (24) est constante, lors du processus d'introduction par torsion de la surface périphérique extérieure (13) de la partie coupante (1) dans la surface périphérique intérieure (23) de la partie de serrage (2), une variation de distance entre une ligne de projection de la surface périphérique intérieure (23) et l'axe central (24) étant ΔR, qui satisfait à : 0 < ΔR ≤ 0,04 mm.

6. Outil de perçage selon la revendication 5, **caractérisé en ce que**, lorsque l'évidement (3) de la partie coupante (1) est complètement introduit par torsion dans la saillie (4) de la partie de serrage (2), un angle de torsion circonférentiel maximal entre l'évidement (3) et la saillie (4) est γ, qui satisfait à : 70° ≤ γ ≤ 130°.

7. Outil de perçage selon la revendication 6, **caractérisé en ce que**, lorsque l'angle de torsion est de 0,4 γ - 0,65 γ, une distance R entre la ligne de projection de la surface périphérique intérieure (23) et l'axe central (24) présente une valeur minimale dans le plan passant par l'axe central (24).

8. Outil de perçage selon la revendication 7, **caractérisé en ce que**, lorsque l'évidement (3) de la partie coupante (1) est introduit par torsion dans la saillie (4) de la partie de serrage (2), la variation de distance ΔR varie linéairement avec l'augmentation de l'angle de torsion.

9. Outil de perçage selon la revendication 4, **caractérisé en ce que**, dans le plan passant par l'axe central (24), une distance R entre la ligne de projection de la surface périphérique intérieure (23) et l'axe central (24) est constante, lors du processus d'introduction par torsion de la surface périphérique extérieure (13) de la partie coupante (1) dans la surface périphérique intérieure (23) de la partie de serrage (2), dans le plan passant par l'axe central (24), une variation de distance entre la ligne de projection de la surface périphérique extérieure (13) et l'axe central (24) étant △R', qui satisfait à : 0 < △R' ≤ 0,04 mm.

10. Outil de perçage selon la revendication 9, **caractérisé en ce que**, lorsque l'évidement (3) de la partie coupante (1) est complètement introduit par torsion dans la saillie (4) de la partie de serrage (2), un angle de torsion circonférentiel maximal entre l'évidement (3) et la saillie (4) est γ, qui satisfait à : 70° ≤ γ ≤ 130°.

11. Outil de perçage selon la revendication 10, **caractérisé en ce que**, lorsque l'angle de torsion est de 0,4 γ - 0,65 γ, une distance R' entre la ligne de projection de la surface périphérique extérieure (13) et l'axe central (24) présente une valeur maximale dans le plan passant par l'axe central (24).
